# EUROPEAN PATENT SPECIFICATION

(11) **EP 1 297 378 B1**
(45) Date of publication and mention of the grant of the patent: **08.03.2006**
(21) Application number: 01917376.4
(22) Date of filing: 05.04.2001
(51) Int. Cl.: G02C 5/14

(54) **SPECTACLE FAMILY HAVING DIFFERENTLY CURVED FRAMES AND INTERCHANGEABLE STEMS**
BRILLENFAMILIE MIT FASSUNGEN UNTERSCHIEDLICHER KURVENFORMEN UND AUSWECHSELBAREN BÜGELN
FAMILLE DE LUNETTES AYANT DES MONTURES DIVERSEMENT INCURVEES ET DES BRANCHES INTERCHANGEABLES

(30) Priority: 05.05.2000 IT MI20000274 U
(43) Date of publication of application: 02.04.2003
(73) Proprietor: Fusi, Renata, 20123 Milano (IT); Mollica Rosti, Silvana, 20145 Milano (IT); Zanotto, Paolo, 20133 Milano (IT)
(72) Inventor: FUSI, Renata, I-20123 Milano (IT); MOLLICA, Silvana, I-20145 Milano (IT); ZANOTTO, Paolo, I-20133 Milano (IT)
(74) Representative: Faggioni, Carlo Maria
(86) International application number: PCT/IB2001/000573
(87) International publication number: WO 2001/086342

(56) References cited:
- EP-A- 0 938 015
- US-A- 5 035 498
- US-A- 5 768 716

## Description

The present model relates to a series or family of spectacles with frames having different curvatures. In particular, it relates to a family of spectacles in which the different frames may be assembled with the same stems without the wearability being affected in any way.

As is known, many types of spectacles with the most varied shapes, forms, colours and uses exist on the market, said spectacles being carefully designed and adjusted taking into account not only aesthetic, but also ergonomic requirements, namely the compliance with precise dimensional ratios in order to ensure comfortable use thereof.

In particular, the most important parameters which must be taken into account include the extension and curvature of the frame (which we shall define below, using an unconventional classification, of "base N", where "N" is an integer which is higher the more pronounced the curvature).

These parameters determine, among other things, the length and the shape of the stems. In fact, as can be understood, the greater the extension and the curvature of the frame, the more the lateral ends, on which the stems are normally hinged, will be set back with respect to the bridge and therefore the shorter shall be the stems. Consequently, even though the frames may belong, for example, to a same ornamental family, respective proprietary stems must be designed and manufactured for each specific extension and/or curvature of each frame.

This is, however, disadvantageous both from a production point of view and from the point of view of management of warehouse supplies.

For some time now, spectacles with stems which may be removably fixed to the frame by means of fairly standardised interlocking hinging systems exist on the market, resulting in more flexible management of the warehouse stocks and in a certain degree of interchangeability between the various parts. However, this approach, per se, is not yet entirely satisfactory and only partially solves the problems of the known art.

The object of the present invention is therefore to provide a spectacles family which completely overcomes the drawbacks mentioned above, i.e. envisages a series of improved frames which, although having a different curvature and extension, use identical stems.

This object is achieved by means of a family of spectacles, the essential features of which are described in the accompanying claims.

Further details and characteristic features of the frames and the stems according to the invention will appear clearly from the detailed description which follows, considered in conjunction with the accompanying drawings, in which:
Fig. 1 is a schematic plan view which shows two stems arranged in the vicinity of two frames with different curvature;
Figs. 2A-2C are partial schematic plan views of three spectacles belonging to a same family according to the invention; and
Figs. 3 and 4 are partial perspective views, on a larger scale, which show a detail of an example of a system for mounting the stem on the frame, in the engaging position and in the locked position, respectively.

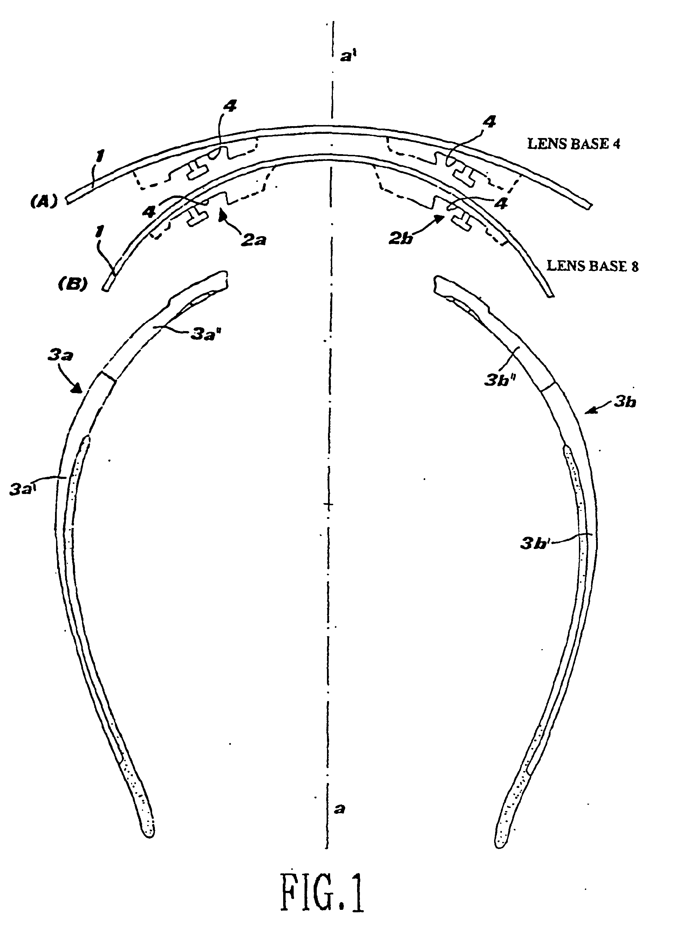

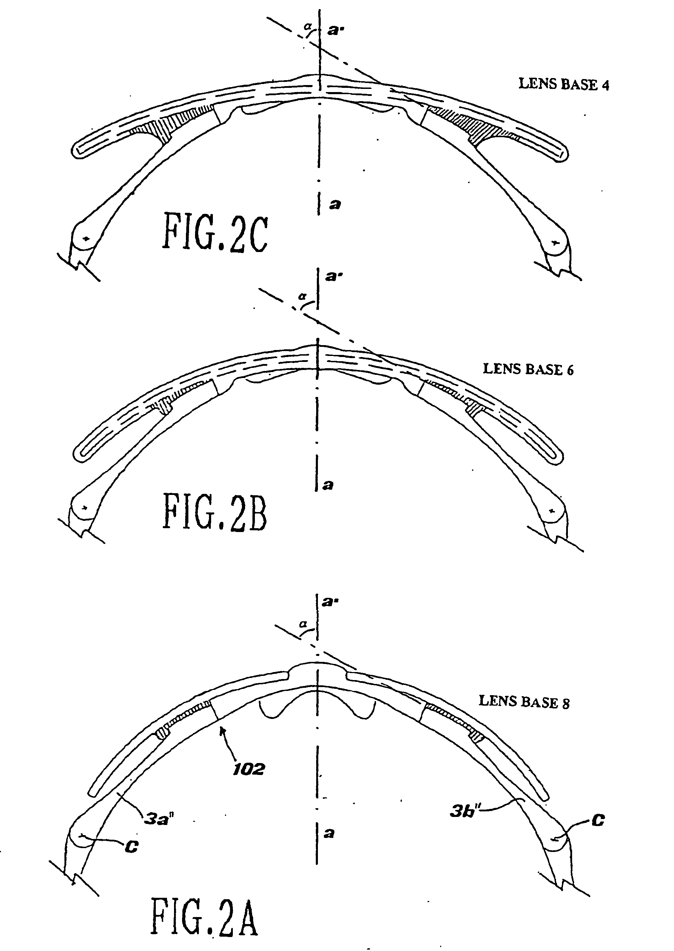

As can be noted from Fig. 1 and Figs. 2A-2C, a same family of spectacles (for example with the same aesthetic appearance) has frames 1 which have different curvatures, for example are fitted with "base 4" lens (example A) or "base 8" lens (example B). It can be understood that, if the stems were hingeably mounted in a conventional manner on the two ends of the frames, they would have to have different lengths and forms for each specific frame base.

According to the present invention, each frame in the family of spectacles is provided with a rapid-engagement system 2a and 2b for the stems 3a and 3b. The rapid-engagement system 2a and 2b may use any technical principle already known per se, but in an original manner has a locating surface or plane 4 which maintains a position and attitude (angle α) with respect to an axis of symmetry a-a' of the spectacles, which are substantially constant for the entire family to which said spectacles belong.

Consequently, the body of the rapid-engagement elements 2a and 2b which carries the locating surface 4 has a thickness which is variable from one frame to another within the same family of spectacles, precisely so as to allow the two abovementioned parameters to be kept constant.

In this connection, it is understood that the locating surface for the frame and the stems is not necessarily the plane 4 indicated in the figures, but any coupling surface having the abovementioned characteristics. For example, another locating surface according to the invention is that indicated by the number 102.

Advantageously, the distance of the engaging elements 2a and 2b from the axis of symmetry of the spectacles (or, in an equivalent manner, of the coupling zone between the stems and frame) is less than 42 mm and preferably less man 38 mm: this allows the variation in thickness of the body of these elements to be kept within acceptable limits, also for a family of spectacles having curvatures varying from "base 4" to higher bases.

The body of the engaging elements 2a and 2b may be moulded as one piece with the frame 1, but may also be made separately so as to be later assembled by means of fitting with the frame 1 (using glue if necessary) performed by the user. According to this latter embodiment, the package containing the spectacles, when purchased, contains a plurality of carrying bodies with locating surfaces 4, of varying thickness, which the user will choose and fit (arranging them between the frame and the stems) depending on his/her preferences or the form of his/her head.

According to the invention, preferably each stem 3a, 3b is formed by a main portion 3a' and 3b' with which a connecting portion 3a" and 3b" is hinged.

The connecting portions have a dual function: on the one hand, they are designed to ensure firm fastening of the stems to the frame engaging elements and, on the other hand, they transfer, laterally towards the outside of the frame (as can be clearly understood from Figs. 2A-2C), the hinging point C of the stems, which otherwise could interfere with the user's face.

Since the connecting portions 3a" and 3b" may be easily engaged with and disassembled from the frame, the latter may be moulded without particular technical problems. Otherwise, in the case of frames with a more pronounced curvature, such as that with a "base 8" curvature shown in Fig. 2A, an undercut would be formed between the connecting portion and the frame itself, resulting in considerable complications during the removal of parts from the mould.

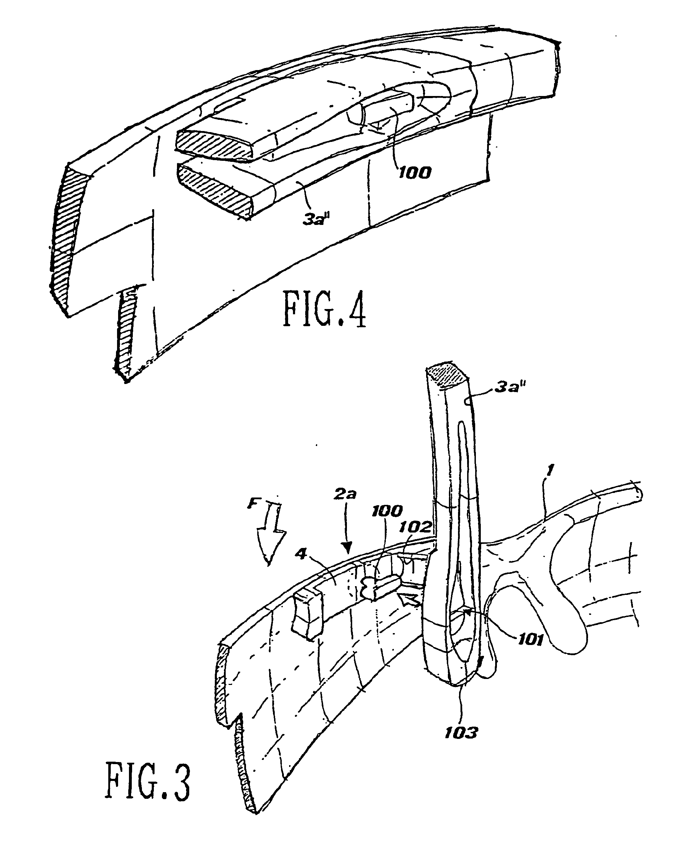

Finally, Figs. 3 and 4 show an example of an engaging element consisting of a T-shaped pin 100 which can be inserted into a rectangular opening 101 formed in the end of the connecting portion 3a" of the stem 3a. In the position shown in Fig. 3, the stem may be freely engaged with the pin 100 until it abuts against the locating surface 4 of the frame 1. By means of anti-clockwise rotation through 90° (in the direction of the arrow F in the drawing), the opening 101 is arranged in a position which prevents disengagement from the pin 100: in the position shown in Fig. 4, therefore, the stem is perfectly engaged and locked with the frame. Suitable mutually engaging surfaces. 102 and 103, respectively belonging to the engaging element and to the connecting portion of the stem, are provided in order to prevent accidental rotation of the stem from its locked position in Fig. 4.

With the family of spectacles according to the invention the objects indicated in the introductory paragraphs have therefore been fully achieved. In fact, the frames of the said family, although differing from each other in terms of curvature and extension, may use the same stems: in this way the desired savings in terms of production and storage are achieved.

Furthermore, it is possible to provide a product which may be customized by the purchaser in accordance with his/her requirements. Finally, the convenient interchangeability of the stems, which form the most inexpensive part of the spectacles, allows easy and advantageous replacement in the event of defects or accidental breakage.

It is understood, however, that the present invention has been described in detail with reference to certain preferred non-limiting embodiments thereof; therefore it must be understood that the scope of protection offered embraces any other variant which employs the same teachings, according to the accompanying claims.

For example, the material used for manufacturing the spectacle family may be either metal or plastic, depending on the aesthetic requirements. Finally, many other engaging systems may be used, such as a pin emerging from the surface 102 and engaging in bayonet fashion longitudinally inside the stem.

## Claims

1. A family of spectacles having front frames (1) with different curvatures,
wherein each of said front frames is provided with engaging elements (2a, 2b) for removably mounting a pair of ear stems (3a, 3b) such as to form spectacles having an axis of symmetry (a),
**characterized in that** each of the engaging elements has at least one locating surface (4) arranged to abut said removable stem, said locating surface (4) being arranged between each removable stem and the frame, fixed to said frame and for each of
the different front frames, each of said engaging elements (2a, 2b) is oriented such that the at least one locating surface (4) has the same angle (□) and the same distance with respect to said axis of symmetry (a) such os to provide a constant orientation of the so abutting stems (3a, 3b) within the family of spectacles irrespective of the different curvatures of said frames (1).

2. The family of spectacles according to Claim 1, in which said engaging elements (2a, 2b) comprise a carrying body for said locating surface (4) which has variable dimensions depending on the extension and curvature of said frames.

3. The family of spectacles according to Claim 2, in which said locating surface (4) is substantially flat and said carrying bodies are generally in the form of wedge of variable thickness.

4. The family of spectacles according to any one of the preceding claims, in which said stems (3a, 3b) comprise a main portion (3a', 3b') with which a connecting portion (3a", 3b") is hinged, the latter being designed to engage with said engaging element (2a, 2b) of the frame.

5. The family of spectacles according to Claim 4, in which said connecting portion (3a", 3b") is also apt to transfer the hinging point of the stem to a second distance from the axis of symmetry of the spectacle so as not to cause interference between said stem and the user's face.

6. The family of spectacles according to any one of the preceding claims, in which said first distance from the axis of symmetry of the spectacle is less than 42 mm and preferably less than 38 mm.

7. The family of spectacles according to any one of Claims 2 to 6, in which said carrying body is envisaged as being a separate part which can be fixed by the user to said frame (1).

8. Method of manufacturing spectacles belonging to a spectacle family having frames (1) with different curvatures and extensions, comprising the steps of
- moulding a plurality of front frames (1) provided with engaging elements for removably mounting stems such as to form spectacles having an axis of symmetry (a), **characterized in that** it further comprises the following steps
- providing said engaging elements (2a, 2b) with at least one locating surface (4) to which a respective removable stem is intended to abut, said surface (4) being fixed to said frame (1) and having for each of the different front frames the same angle (a) and the same distance with respect to said axis of symmetry (a) such as to provide a constant orientation of the so abutting stems (3a, 3b) within the family of spectacles irrespective of the different curvatures of said frames (1).
- providing a plurality of stem pairs (3a, 3b) identical for all said plurality of frames (1) of the same family.

9. The method of claim 8), wherein each of the spectacles is manufactured with the features of claims 2) to 7).

## Revendications

1. Famille de lunettes ayant des montures avant (1) de différentes courbures,
dans laquelle chacune desdites montures avant est pourvue d'éléments d'engagement (2a, 2b) destinés au montage amovible d'une paire de branches (3a, 3b) afin de former des lunettes ayant un axe de symétrie (a),
**caractérisée en ce que** chacun des éléments d'engagement présente au moins une surface de positionnement (4) agencée de façon à être en appui sur ladite branche amovible, ladite surface de positionnement (4) étant agencée entre chaque branche amovible et la monture, fixée à ladite monture et, pour chacune des différentes montures avant, chacun desdits éléments d'engagement (2a, 2b) est orienté de façon que la, au moins une, surface de positionnement (4) ait le même angle (α) et la même distance par rapport audit axe de symétrie (a) afin d'assurer une orientation constante des branches (3a, 3b) ainsi en appui dans la famille des lunettes indépendamment des différentes courbures desdites montures (1).

2. Famille de lunettes selon la revendication 1, dans laquelle lesdits éléments d'engagement (2a, 2b) comprennent un corps de support pour ladite surface de positionnement (4) qui a des dimensions variables suivant l'étendue et la courbure desdites montures.

3. Famille de lunettes selon la revendication 2, dans laquelle ladite surface de positionnement (4) est sensiblement plate et lesdits corps de support ont généralement la forme d'un coin d'épaisseur variable.

4. Famille de lunettes selon l'une quelconque des revendications précédentes, dans laquelle lesdites branches (3a, 3b) comprennent une partie principale (3a', 3b') avec laquelle une partie de liaison (3a", 3b") est articulée, cette dernière étant conçue pour engager ledit élément d'engagement (2a, 2b) de la monture.

5. Famille de lunettes selon la revendication 4, dans laquelle ladite partie de liaison (3a", 3b") est également apte à transférer le point d'articulation de la branche à une seconde distance de l'axe de symétrie des lunettes afin de ne pas provoquer d'interférence entre ladite branche et le visage de l'utilisateur.

6. Famille de lunettes selon l'une quelconque des revendications précédentes, dans laquelle ladite première distance à partir de l'axe de symétrie des lunettes est inférieure à 42 mm et avantageusement inférieure à 38 mm.

7. Famille de lunettes selon l'une quelconque des revendications 2 à 6, dans laquelle ledit corps de support est envisagé comme étant une pièce séparée qui peut être fixée par l'utilisateur à ladite monture (1).

8. Procédé de fabrication de lunettes appartenant à une famille de lunettes ayant des montures (1) de différentes courbures et étendues, comprenant les étapes qui consistent :
- à mouler plusieurs montures avant (1) pourvues d'éléments d'engagement pour le montage amovible de branches afin de former des lunettes ayant un axe de symétrie (a),
**caractérisé en ce qu'**il comprend en outre les étapes suivantes qui consistent :
- à pourvoir lesdits éléments d'engagement (2a, 2b) d'au moins une surface de positionnement (4) sur laquelle une branche amovible respective est destinée à prendre appui, ladite surface (4) étant fixée à ladite monture (1) et ayant, pour chacune des différentes montures avant, le même angle (α) et la même distance par rapport audit axe de symétrie (a) afin d'assurer une orientation constante des branches (3a, 3b), ainsi en appui, dans la famille de lunettes indépendamment des différentes courbures desdites montures (1),
- à utiliser plusieurs paires de branches (3a, 3b) identiques pour la totalité de ladite pluralité de montures (1) de la même famille.

9. Procédé selon la revendication 8, dans lequel chacune des lunettes est fabriquée avec les caractéristiques des revendications 2 à 7.

## Patentansprüche

1. Familie von Brillen mit vorderen Fassungen (1) mit unterschiedlichen Krümmungen,
worin jede von genannten vorderen Fassungen mit Eingreifelementen (2a, 2b) zum abnehmbaren Montieren eines Paares Bügel (3a, 3b) zur Ausbildung von Brillen mit einer Symmetrieachse (a) versehen ist,
**dadurch gekennzeichnet, daß** jedes Eingreifelement mindestens eine Anschlagfläche (4) aufweist, die gestaltet ist, um an genannten abnehmbaren Bügel anzuliegen, wobei genannte Anschlagfläche (4) zwischen jedem abnehmbaren Bügel und der Fassung, an genannter Fassung befestigt, angeordnet ist, und für jede der verschiedenen vorderen Fassungen jedes genannte Eingreifelement (2a, 2b) derart orientiert ist, daß die mindestens eine Anschlagfläche (4) denselben Winkel (α) und denselben Abstand in Bezug auf genannte Symmetrieachse (a) aufweist, um für eine konstante Orientierung der derart anliegenden Bügel (3a, 3b) in der Familie von Brillen unabhängig von den unterschiedlichen Krümmungen genannter Fassungen (1) zu sorgen.

2. Familie von Brillen nach Anspruch 1, **dadurch gekennzeichnet, daß** genannte Eingreifelemente (2a, 2b) einen Tragkörper für genannte Anschlagfläche (4) umfassen, der variable Abmessungen in Abhängigkeit von der Erstreckung und Krümmung genannter Fassungen aufweist.

3. Familie von Brillen nach Anspruch 2, **dadurch gekennzeichnet, daß** genannte Anschlagfläche (4) im wesentlichen flach ist und genannte Tragkörper allgemein in Form von Keilen mit variabler Dicke vorliegen.

4. Familie von Brillen nach einem der vorangehenden Ansprüche, **dadurch gekennzeichnet, daß** genannte Bügel (3a, 3b) einen Hauptabschnitt (3a', 3b') umfassen, mit dem ein Verbindungsabschnitt (3a", 3b") gelenkig verbunden ist, wobei letzterer gestaltet ist, um mit genanntem Eingreifelement (2a, 2b) der Fassung in Eingriff zu kommen.

5. Familie von Brillen nach Anspruch 4, **dadurch gekennzeichnet, daß** genannter Verbindungsabschnitt (3a", 3b") auch geeignet ist, um den Drehpunkt des Bügels in einen zweiten Abstand von der Symmetrieachse der Brille zu überführen, damit keine Störung zwischen genanntem Bügel und dem Gesicht des Benutzers verursacht wird.

6. Familie von Brillen nach einem der vorangehenden Ansprüche, **dadurch gekennzeichnet, daß** der erste Abstand von der Symmetrieachse der Brille geringer als 42 mm und vorzugsweise geringer als 38 mm ist.

7. Familie von Brillen nach einem der Ansprüche 2 bis 6, **dadurch gekennzeichnet, daß** genannter Tragkörper als ein separates Teil vorgesehen ist, das von dem Benutzer an genannter Fassung (1) befestigt werden kann.

8. Verfahren zur Herstellung von Brillen, die zu einer Brillenfamilie mit Fassungen (1) mit unterschiedlichen Krümmungen und Erstreckungen gehören, das die Schritte umfaßt:
- Formen einer Vielzahl von vorderen Fassungen (1), die mit Eingreifelementen zum abnehmbaren Montieren von Bügeln zur Ausbildung von Brillen mit einer Symmetrieachse (a) versehen sind,
**dadurch gekennzeichnet, daß** es ferner die folgenden Schritte umfaßt:
- Versehen von genannten Eingreifelementen (2a, 2b) mit mindestens einer Anschlagfläche (4), an die ein jeweiliger abnehmbarer Bügel anliegen soll, wobei genannte Fläche (4) an genannter Fassung (1) befestigt ist und für jede der unterschiedlichen vorderen Fassungen denselben Winkel (α) und denselben Abstand in Bezug auf genannte Symmetrieachse (a) aufweist, so daß für eine konstante Orientierung der derart anliegenden Bügel (3a, 3b) in der Familie von Brillen unabhängig von den unterschiedlichen Krümmungen von genannten Fassungen (1) geliefert wird,
- Bereitstellen einer Vielzahl von Bügelpaaren (3a, 3b), die für die gesamte Vielzahl von Fassungen (1) derselben Familie identisch sind.

9. Verfahren nach Anspruch 8, **dadurch gekennzeichnet, daß** jede der Brillen mit den Merkmalen der Ansprüche 2 bis 7 hergestellt wird.
